# EUROPEAN PATENT APPLICATION

(11) **EP 3 403 732 A1**
(43) Date of publication of application: **21.11.2018**
(21) Application number: 18171571.5
(22) Date of filing: 09.05.2018
(51) Int. Cl.: B08B 9/045, E21B 29/00, F16L 55/18

(54) **METHOD AND DEVICE FOR MACHINING A CONCRETE PIPE**

(30) Priority: 19.05.2017 SE 1700102
(71) Applicant: Rydman Husbytorp AB, 197 91 Bro (SE)
(72) Inventor: Rydman, Sven, 197 91 Bro (SE)
(74) Representative: Stein, Jan

(57) **Abstract**

The invention relates to a method for machining of a concrete pipe (2) that is to be lined, comprising the step of to increase the inner diameter (D) of the concrete pipe (2) before lining by removing by mechanical machining with a concrete machining device (8) concrete (10) from the inner wall of the concrete pipe (2). The invention also relates to a method for lining of concrete pipes (2), and to a device for machining of a concrete pipe (2) which is to be lined.

## Description

### Technical area

The present invention relates to a method for machining of a concrete pipe which is to be lined according to the preamble of claim 1 and to a method for lining of concrete pipes according to the preamble of claim 5, and a device for machining of a concrete pipe which is to be lined according to the preamble of claim 6.

### Background

When pipes age problems with leaks often arise due to that the pipe wall has been damaged and has cracked. In pipes placed in the ground this can e.g. depend on roots penetrating from the outside into the pipe or subsidence in materials around the pipe. This applies e.g. for old concrete pipes which have often been used as pipes for waste water or surface water and other low pressure applications that usually utilize the principle of gravitation for flow feed and whose pipe walls often have become brittle after a long time of use.

The main problem with old pipes for surface water or waste water is not that water may leak out from the pipe and into the surrounding ground, the main problem is instead that ground water penetrates into the pipes from the surrounding ground which increases the flow of water in the pipes to such an extent that the waste water purification plants where the pipes end have difficulties to be able to purify all of this increased water flow.

One way of handling the problem with pipes that have been damaged and have cracked is to remove the old pipe and to replace it with a new pipe. This is usually very costly and time consuming, especially if the pipe is placed under a building, for example if one wishes to replace waste water pipes in and under buildings.

One alternative to replacing old pipes with new is to instead clean the inside of the old pipe from deposits, roots, debris etc. and to thereafter mount a new more narrow pipe inside the old damaged pipe. In this way, an undamaged pipe wall is obtained without having to remove the old pipe.

Another alternative is to line the old pipe, also called "reline" the old pipe, i.e. to coat the inner pipe wall with a layer of material which then stiffens and in this way to build up an undamaged inner pipe wall in the old pipe.

Lining, also called "relining", can e.g. be executed by applying epoxy on the inside of pipe walls in old pipes with a rotating brush that has been dipped in epoxy. Another possible way to line pipes is to install a tubular casing, which is flexible at the insertion in the pipe and which stiffens a time after it has been placed inside the pipe, against the inner wall of the old pipe. The tubular casing thus consists of a material which after it has stiffened forms a stiff pipe lining on the inside of the old pipe, where the pipe lining abuts against the inner wall of the old pipe. The tubular casing can e.g. be a flexible porous tubular body made of synthetic material and be soaked with epoxy or other plastic material, e.g. polyester felt impregnated with epoxy, where the epoxy or the other plastic material stiffens after installation inside the pipe, usually cures under pressurization of the inside of the tubular casing which then simultaneously is pressed outwards against the inside of the old pipe.

One way of lining old pipes using flexible tubular casings is to use a flexible tubular casing which is turned inside out, where one end of this flexible tubular casing is turned right so that this one end of the flexible tubular casing has its outer side facing the inner side of the pipe wall of the pipe that is to be lined. This outer side of the tubular casing is then placed against the inner wall of the pipe which is to be lined and is kept there, where after the mainly inside out turned tubular casing is gradually fed into the pipe that is to be lined while it is simultaneously gradually turned right and sets with its outer side against the inner wall in the pipe to be lined. When then the flexible tubular casing stiffens, e.g. by that it is exerted to pressure from the inside, a stiff tubular lining is formed inside the old pipe.

By lining, damaged cracked leaking pipes be fixed quicker than when exchanging the damaged, cracked leaking pipes to new ones. Also, cracks do not have to be sealed one by one risking to miss the sealing of a crack.

Before lining, the old pipe, for example a concrete pipe, is prepared for lining by cleaning the inside of the old pipe and the pipe walls from deposits, roots, debris etc. so that the inner surface of the pipe wall in the old pipe is ready to be coated with material which creates an undamaged inner pipe wall in the old pipe.

The invention presents an alternative solution to preparing pipes for lining.

### Summary of the invention

The problem of preparing concrete pipes for lining is solved according to the invention by a method for machining of a concrete pipe which is to be lined according to the characterizing portion of claim 1, a method for lining of concrete pipes according to the characterizing portion of claim 5, and a device for machining of a concrete pipe which is to be lined according to the characterizing portion of claim 6.

By that the method for machining of a concrete pipe which is to be lined comprises the step to increase the inner diameter of the concrete pipe before lining by removing by mechanical machining with a concrete machining device concrete from the inner wall of the concrete pipe, the advantage of that the inner diameter of the concrete pipe including lining, i.e. the inner diameter of the lined concrete pipe, is larger than the inner diameter of a corresponding concrete pipe including an equally thick layer of lining but where the inner diameter of the concrete pipe has not been increased before lining. Thus is obtained, with the method for machining according to the invention, a lesser throttling of the flow through the lined pipe when lining a concrete pipe.

By that the method for lining of a concrete pipe comprises the step to increase the inner diameter of the concrete pipe before lining by removing by mechanical machining with a concrete machining device concrete from the inner wall of the concrete pipe, the advantage of that the inner diameter of the concrete pipe including lining, i.e. the inner diameter of the lined concrete pipe, is larger than the inner diameter of a corresponding concrete pipe including an equally thick layer of lining but where the inner diameter of the concrete pipe has not been increased before lining. Thus is obtained, with the method for lining according to the invention, a lesser throttling of the flow through the lined pipe when lining a concrete pipe.

By that the device is a concrete machining device arranged for removal of concrete from the inner wall of the concrete pipe by mechanical machining, the advantage of that the inner wall of the concrete pipe can be machined so that the inner diameter of the concrete pipe is increased, where by the inner diameter of the machined concrete pipe including lining, i.e. the inner diameter of the lined concrete pipe, is larger than the inner diameter of a corresponding concrete pipe including an equally thick layer of lining but where the inner diameter of the concrete pipe has not been increased before lining. Thus is obtained, with the device according to the invention, a lesser throttling of the flow through the lined pipe when lining a concrete pipe.

According to one aspect of the invention, the method for machining of a concrete pipe which is to be lined preferably comprises the step to increase the inner diameter of the concrete pipe before lining by removing concrete from the inner wall of the concrete pipe corresponding to at least the thickness of the lining which is to be applied on the inner wall of the concrete pipe after the machining of the concrete pipe.

According to one aspect of the invention, the method for machining of a concrete pipe which is to be lined preferably comprises the step of increasing the inner diameter of the concrete pipe before lining by removing concrete from the inner wall of the concrete pipe corresponding to more than the thickness of the lining which is to be applied on the inner wall of the concrete pipe after the machining of the concrete pipe.

According to one aspect of the invention, the method for machining of a concrete pipe which is to be lined preferably comprises the step of to before removal of concrete from the inner wall of the concrete pipe determine the thickness of the lining which is to be applied on the inner wall of the concrete pipe after the machining of the concrete pipe.

According to one aspect of the invention for the method for machining of a concrete pipe which is to be lined, the concrete machining device for removal of concrete from the inner wall of the concrete pipe is preferably a milling device.

According to one aspect of the invention for the device for machining of a concrete pipe which is to be lined, the concrete machining device arranged for removal of concrete from the inner wall of the concrete pipe by mechanical machining is preferably a milling device.

According to one aspect of the invention the device for machining of a concrete pipe which is to be lined preferably comprises a rotatable milling head.

According to one aspect of the invention the device for machining of a concrete pipe which is to be lined preferably comprises a rotatable milling head which is provided with a number of milling members.

According to one aspect of the invention for the device for machining of a concrete pipe which is to be lined the milling members preferably are arranged on a rotatable milling head in a stepped configuration.

According to one aspect of the invention for the device for machining of a concrete pipe which is to be lined the milling head preferably presents a stepped radial outer surface from which the milling members protrude.

According to one aspect of the invention for the device for machining of a concrete pipe which is to be lined the milling members are preferably positioned closer to the rotation axis of the milling head the more forward, seen in the milling direction, they are positioned on the milling head.

According to one aspect of the invention for the device for machining of a concrete pipe to be lined milling members are preferably symmetrically arranged in groups at the radial outer surface of the milling head.

According to one aspect of the invention for the device for machining of a concrete pipe which is to be lined rotation of the milling head is preferably generated by that the milling head is mounted rotatably locked on a rotatable drive shaft having an axis of rotation corresponding to the axis of rotation of the milling head.

According to one aspect of the invention for the device for machining of a concrete pipe which is to be lined the milling head is preferably kept centered in the concrete pipe during the machining of the concrete pipe by that the drive shaft is arranged suspended in a housing and the housing is arranged to be supported against the inner wall of the concrete pipe by support wheels arranged on spring loaded support arms that are pivotably fastened to the housing and that are pushed by springs outwards from the housing towards the inner wall of the concrete pipe.

### Brief description of drawings

The invention will be described more in detail with support by the attached drawings, where:
Figure 1 shows schematically a section of a concrete pipe which is to be lined, and a method according to an embodiment of the invention for machining of a concrete pipe which is to be lined, and a device according to an embodiment of the invention for machining of a concrete pipe which is to be lined,
Figure 2 shows schematically the result of a method according to an embodiment of the invention for lining of a concrete pipe, and
Figure 3 shows schematically a device for machining of a concrete pipe which is to be lined according to a further embodiment of the invention.

### Description of preferred embodiments

Similar parts in the different Figures are denoted with the same reference signs.

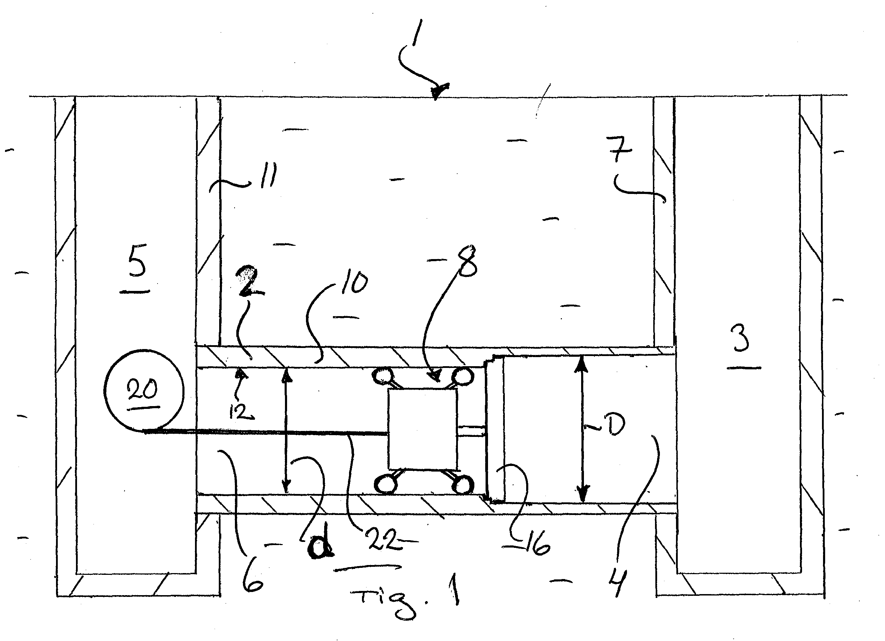

Figure 1 shows schematically a section of a concrete pipe 2 which is to be lined, and illustrates a method according to an embodiment of the invention for machining of a concrete pipe 2 which is to be lined, also called "relined". Lining is also called "relining". A device according to an embodiment of the invention for machining of a concrete pipe which is to be lined is also shown.

Concrete pipes can have different material thickness in different parts of the pipe wall before machining, and also after machining.

It is common that a concrete pipe 2 which is placed below the ground surface 1 and which is intended for waste water or surface water is arranged so that the openings 4, 6 of the concrete pipe 2 open into pipe wells 3, 5, i.e. that the concrete pipe 2 is positioned between two pipe wells 3, 5 in order to be able to clean out the concrete pipe 2 if needed. A common distance between such pipe wells 3, 5 may e.g. be about 50-100 m. The pipe wells 3, 5 often have walls 7, 11 made of concrete.

When concrete pipes age problems often arise with leaks depending on that the pipe wall has been damaged and has cracked. For concrete pipes placed in the ground this may depend on e.g. roots penetrating from the outside into the pipe or subsidence in the material around the pipe. As mentioned above one can line pipes in order to get a lined pipe which is tight. The lining can then e.g. be made via pipe wells 3, 5.

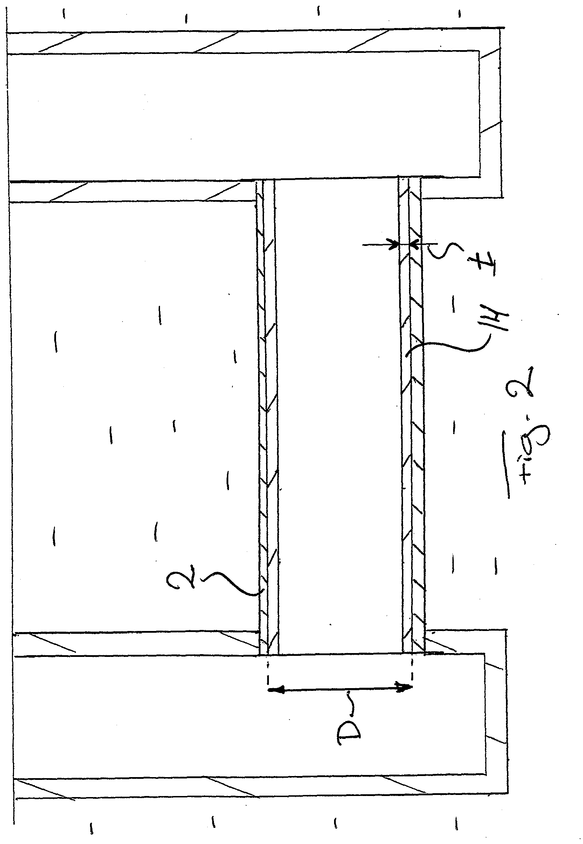

The method according to the invention for machining of a concrete pipe 2 which is to be lined comprises the step of to increase the inner diameter D of the concrete pipe 2 before lining by removing by mechanical machining with a concrete machining device 8 concrete 10 from the inner wall 12 of the concrete pipe 2. The mechanical machining is preferably milling, but also other mechanical machining such as drilling, grinding etc. is possible. Compared with e.g. drilling, milling has the advantage of that milling can be performed on long pipes and pipes where there is limited space at the pipe orifice and pipes with large inner diameters. Compared with e.g. grinding, milling has the advantage of that milling enables much faster removal of concrete. When milling, the concrete machining device 8 is a milling device. The machining is then done by milling away concrete 10 from the inner wall 12 of the concrete pipe 2. Hereby is obtained the advantage of that the inner diameter of the finished lined concrete pipe (see Figure 2), i.e. the pipe comprising the machined concrete pipe and lining, is larger than the inner diameter of a corresponding concrete pipe including an equally thick layer of lining but where the inner diameter d of the concrete pipe has not been increased before the lining. By increasing the inner diameter D of the concrete pipe 2 before lining by removing concrete 10 from the inner wall 12 of the concrete pipe 2 the throttling of flow through a finished lined concrete pipe is thus decreased.

When lining a concrete pipe the flow capacity in the lined concrete pipe is higher, up to the order of magnitude of 30% higher, depending of which material is used when lining, than in the original concrete pipe if both have the same inner diameter size. This is due to that the inner surface in a lined concrete pipe is smoother than the inner surface in a concrete pipe. After lining one wishes to maintain at least the same flow capacity as was present in the concrete pipe before lining. As flows that one desires to lead in pipe systems consisting of concrete pipes often increase over time due to that more and more users connect to the pipe systems, e.g. a waste water pipe system, and as the above difference in flow capacity gives possibilities to increase the flow capacity in pipe systems after lining with maintaining the inner diameter in the pipes, there is a possibility to increase the capacity in concrete pipes with the method according to the invention. This gives the advantage of that the old pipes do not have to be exchanged to new with larger inner diameter when the flow which the pipe has to be able to handle increases by that more users are connected to the pipe.

Figure 2 shows schematically the result of a method according to an embodiment of the invention for lining of a concrete pipe 2.

Below is referred to both Figure 1 and Figure 2:
Preferably the method according to the invention for machining of a concrete pipe 2 which is to be lined comprises the step of to increase the inner diameter D of the concrete pipe 2 before lining by removing concrete 10 from the inner wall 12 of the concrete pipe 2 corresponding to at least the thickness t of the lining 14 (see Figure 2) which is to be applied on the inner wall 12 of the concrete pipe 2 after the machining of the concrete pipe 2.

For example, if the thickness of the lining is equal all over the lining and is 10 mm, concrete 10 is milled away from the inner wall 12 of the concrete pipe 2 until the inner diameter of the concrete pipe 2 has been increased by at least 20 mm. In this way, preferably an inner diameter corresponding to at least the original inner diameter d of the concrete pipe 2 can be maintained in the lined concrete pipe after the lining.

In this way the cavity in the lined concrete pipe gets the same cross sectional area as the cavity in the original concrete pipe.

With the method according to the invention there is also the possibility to produce a lined concrete pipe which has a larger inner diameter than that of the original concrete pipe 2 before machining. This can be done with a method according to the invention for machining of a concrete pipe 2 which is to be lined, comprising the step of to increase the inner diameter D of the concrete pipe 2 before lining by removing concrete 10 from the inner wall 12 of the concrete pipe 2 corresponding to more than the thickness t of the lining 14 (see Figure 2) which is to be applied on the inner wall 12 of the concrete pipe 2 after the machining of the concrete pipe 2.

For example, if the thickness of the lining is equal all over the lining and is for example 10 mm, concrete is milled away from the inner wall 12 of the concrete pipe 2 until the inner diameter D of the concrete pipe 2 has been increased by e.g. 30 mm.

The thickness t of the lining 14 (see Figure 2) which is to be applied on the inner wall 12 of the concrete pipe 2 after the machining of the concrete pipe 2 can be possible to determine before the machining. The thickness t can e.g. be determined by calculating the thickness or by measuring the thickness, depending on which lining method that is to be used.

If the thickness t of the lining 14 (see Figure 2) which is to be applied on the inner wall 12 of the concrete pipe 2 after the machining of the concrete pipe 2 is determined before the machining, the method according to the invention for machining of a concrete pipe 2 which is to be lined can preferably comprise the steps of to determine the thickness t of the lining 14 (see Figure 2) which is to be applied on the inner wall 12 of the concrete pipe 2 after the machining of the concrete pipe 2, and increase the inner diameter D of the concrete pipe 2 before lining by removing concrete 10 from the inner wall 12 of the concrete pipe 2 corresponding to at least the determined thickness of the lining 14 (see Figure 2) which is to be applied on the inner wall 12 of the concrete pipe 2 after the machining of the concrete pipe 2. Alternatively the method according to the invention for machining of a concrete pipe 2 which is to be lined in this case preferably comprise the steps of to determine the thickness t of the lining 14 (see Figure 2) which is to be applied on the inner wall 12 of the concrete pipe 2 after the machining of the concrete pipe 2, and to increase the inner diameter D of the concrete pipe 2 before lining by removing concrete 10 from the inner wall 12 of the concrete pipe 2 corresponding to more than the determined thickness of the lining 14 (see Figure 2) which is to be applied on the inner wall of the concrete pipe 2 after the machining of the concrete pipe 2.

Removal of concrete 10 from the inner wall 12 of the concrete pipe 2 can be done with a concrete machining device 8.

Below is referred to Figure 1:
In case of milling, the concrete machining device 8 is a milling device.

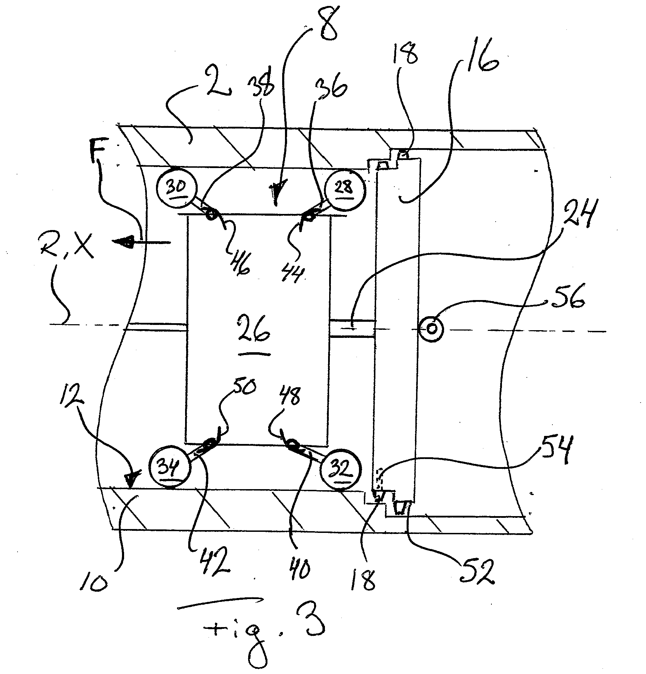

Preferably, the milling device comprises a rotatable milling head 16 (see the embodiments according to Figure 1 and Figure 3, respectively) which preferably is provided with a number of milling members 18 (see the embodiment according to Figure 3), such as for example milling studs and/or milling cutters. The rotation of the milling head may for example be driven by hydraulic operation, water operation or electric motor operation in a way known (not shown). The concrete machining device 8 in the form of a milling device comprising the rotatable milling head 16 may for example be pulled through the concrete pipe 2 by a cable winch 20 and a pulling wire 22 during simultaneous rotation of the milling head 16. Alternatively the milling device may be of self-propelling type in a known way, i.e. that the milling device comprises a drive motor and drive members for propulsion of the milling device inside the pipe from one opening of the pipe to the other opening 4, 6.

The method according to the invention for lining of a concrete pipe 2 comprises the step of to machine a concrete pipe 2 which is to be lined according to any one of the above described aspects, or combinations thereof, and the step of to thereafter apply a lining 14 on the inner wall 12 of the concrete pipe 2.

The lining can be applied against the inner wall 12 of the concrete pipe 2 in any way, for example in one of the ways that have been described under the headline background in this patent application.

Figure 3 shows schematically a further embodiment of a concrete machining device 8 for machining of a concrete pipe 2 which is to be lined according to an embodiment of the invention in the form of a milling device for milling away concrete 10 from the inner wall 12 of the concrete pipe 2, and comprises preferably a rotatable milling head 16 which is provided with a number of milling members 18, such as for example milling studs and/or milling cutters, which protrude outside the outer surface of the milling head 16. The milling protrusion for the milling members 18 may for example be 1-10 mm, preferably 1-8 mm or 1-6 mm or 1-4 mm, such as for example 2 mm. The rotation of the milling head 16 is preferably generated by that the milling head 16 is mounted rotatably locked on a rotatable drive shaft 24 having an axis of rotation X corresponding to the axis of rotation R of the milling head 16. The rotatable drive shaft 24 can be driven by hydraulic operation, water operation or electric motor operation in a known way (not shown).

The milling head 16 can be kept centered in the concrete pipe 2 during the machining of the concrete pipe 2 e.g. by that the drive shaft 24 is arranged suspended in a housing 26 and the housing 26 is arranged to be supported against the inner wall 12 of the concrete pipe 2 by for example support wheels 28, 30, 32, 34 arranged on spring loaded support arms 36, 38, 40, 42 which are pivotably fastened to the housing 26 and which are pushed firmly outwards from the housing 26 towards the inner wall 12 of the concrete pipe 2 by springs 44, 46, 48, 50.

In order to facilitate milling away of concrete 10 from the inner wall 12 of the concrete pipe 2 the milling members 18 are preferably arranged on the rotatable milling head 16 in a stepped configuration, where the milling members 18 preferably are positioned closer to the rotation axis R of the milling head 16 the more forward, seen in the milling direction F, they are positioned on the milling head 16, and where the milling members 18 are positioned further away from the rotation axis R of the milling head 16 the more backward, seen in the milling direction, they are positioned on the milling head 16. This can be achieved by that the milling head presents a in corresponding way stepped radial outer surface 52 from which the milling members 18 protrude. If the distance of the stepped surface 52 to the rotation axis for the milling head 16 is increased in steps by e.g. 2 mm for each step, the radial distance of the milling members 18 from the rotation axis for the milling head 16 increase in a corresponding way. In the Figure two steps are shown, but also more steps are possible. The number of steps on the milling head 16 and the milling protrusion for the milling members 18 can be adapted after what layer thickness of concrete that is to be milled away from the inner wall 12 of the concrete pipe 2. One may for example machine away a 2-20mm thick, or even thicker, layer of concrete from the inner wall of the concrete pipe, all depending on the material thickness in the pipe wall of the concrete pipe and the condition of the pipe.

The milling members 18 are preferably fastened in cavities 54 in the milling head 16, e.g. by that the cavities 54 are threaded holes and that the milling members 18 show threaded parts that fit in the threaded holes.

Milling members 18 can be symmetrically arranged on only parts of or on the whole of the radial circumference of the milling head 16, e.g. arranged grouped in groups at the radial outer surface 52 of the milling head 16, e.g. with groups at every 90^{th} degree about the radial periphery of the milling head 16.

The milling head 16 may be provided with a loop 56 in which a wire (not shown), intended to enable withdrawal of the milling head 16 from the concrete pipe 2 in the direction opposite to the milling direction F in case of malfunction of the milling device 8, can be fastened.

A milling device of the above mentioned kind can be adapted to concrete pipes of varying inner diameters, also to large pipes having inner diameters of the order of magnitude of about 1000 mm, by exchanging between milling heads 16 having different diameters.

## Claims

1. Method for machining of a concrete pipe (2) which is to be lined, **the method comprising the step of:**
- to increase the inner diameter (D) of the concrete pipe (2) before lining by removing by mechanical machining with a concrete machining device (8) concrete (10) from the inner wall (12) of the concrete pipe (2) corresponding to at least the thickness (t) of the lining (14) which is to be applied on the inner wall (12) of the concrete pipe (2) after the machining of the concrete pipe (2).

2. Method according to claim 1, **comprising the step of:**
- to increase the inner diameter (D) of the concrete pipe (2) before lining by removing concrete (10) from the inner wall (12) of the concrete pipe (2) corresponding to more than the thickness (t) of the lining (14) which is to be applied on the inner wall (12) of the concrete pipe (2) after the machining of the concrete pipe (2).

3. Method according to any one of the above claims, **comprising the step of:**
- to determine before removal of concrete (10) from the inner wall (12) of the concrete pipe (2) the thickness (t) of the lining (14) which is to be applied on the inner wall (12) of the concrete pipe (2) after the machining of the concrete pipe (2).

4. Method according to any one of the above claims, **characterized in, that** the concrete machining device (8) for removal of concrete (10) from the inner wall (12) of the concrete pipe (2) is a milling device.

5. Method for lining of concrete pipes, **the method comprising the steps of:**
- to machine a concrete pipe (2) which is to be lined according to any one of the above claims, and
- thereafter to apply a lining (14) on the inner wall (12) of the concrete pipe (2).

6. Device for machining of a concrete pipe which is to be lined, **characterized in, that** the device is a concrete machining device (8) arranged for removal of concrete (10) from the inner wall (12) of the concrete pipe (2) by mechanical machining, where the concrete machining device (8) is a milling device, where the device comprises a rotatable milling head (16), where the rotatable milling head (16) is provided with a number of milling members (18), and where the milling members (18) are arranged on the rotatable milling head (16) in a stepped configuration.

7. Device according to claim 6, **characterized in, that** the milling head (16) presents a stepped radial outer surface (52) from which the milling members (18) protrude.

8. Device according to claim 6 or 7, **characterized in, that** the milling members (18) are positioned closer to the rotation axis (R) of the milling head (16) the more forward, seen in the milling direction (F), they are positioned on the milling head (16).

9. Device according to any one of claims 6-8, **characterized in, that** milling members (18) are symmetrically arranged in groups at the radial outer surface (52) of the milling head (16).

10. Device according to any one of claims 6-9, **characterized in, that** rotation of the milling head (16) is generated by that the milling head (16) is mounted rotatably locked on a rotatable drive shaft (24) having an axis of rotation (X) corresponding to the axis of rotation (R) of the milling head.

11. Device according to claim 10, **characterized in, that** the milling head (16) is kept centered in the concrete pipe (2) during the machining of the concrete pipe (2) by that the drive shaft (24) is arranged suspended in a housing (26) and the housing (26) is arranged to be supported against the inner wall (12) of the concrete pipe (2) by support wheels (28, 30, 32, 34) arranged on spring loaded support arms (36, 38, 40, 42) which are pivotably fastened to the housing (26) and which are pushed outwards from the housing (26) towards the inner wall (12) of the concrete pipe (2) by springs (44, 46, 48, 50).
